# EUROPEAN PATENT APPLICATION

(11) **EP 1 517 204 A2**
(43) Date of publication of application: **23.03.2005**
(21) Application number: 04255305.7
(22) Date of filing: 02.09.2004
(51) Int. Cl.: G05B 19/408

(54) **Programmable controller**

(30) Priority: 05.09.2003 JP 2003314059
(71) Applicant: FANUC LTD, Minamitsuru-gun, Yamanashi 401-0597 (JP)
(72) Inventor: Nagashima, Noritake, Room 8-303, Minamitsuru-gun Yamanashi 401-0511 (JP); Maruyama, Toyokazu, Room 6-201, Minamitsuru-gun Yamanashi 401-0511 (JP)
(74) Representative: Billington, Lawrence Emlyn

(57) **Abstract**

A programmable controller capable of freely changing the execution time ratio of a plurality of sequence programs. A plurality of execution time ratio tables (T1∼Tb) storing different execution time ratios of sequence programs are set in a backup memory (20). Upon start of the power supply, the execution time ratio set in the first table T1 is copied to a work RAM (15), and the sequence programs are executed in the thus-copied execution time ratio. A bit specifying a table is set in the sequence programs, or a table is specified by the operator. When the set bit is detected, the execution time ratio of the table specified by the bit is copied to the work RAM, and the sequence programs are executed thereafter in this execution time ratio. The execution time ratio can be altered at a desired time in the execution of the sequence programs.

## Description

### BACKGROUND OF THE INVENTION

### 1. Field of the Invention

The present invention relates to a programmable controller for executing sequence programs.

### 2. Description of Related Art

A programmable controller executes a sequence program to perform control (M-function, T-function) of a numerical control section of a numerical controller as well as control of peripheral devices such as a workpiece loader and an automatic tool changer (ATC).

As a result of recent enhancement in functionality of machinery, it is often the case that a new peripheral device is added to an existing system. In such cases, a control program for controlling the additional peripheral device is often added as a sequence program for the programmable controller. Also, such a control program is added as a sequence program in order to automate the machine operation. Consequently, the number of sequence programs to be executed by the programmable controller increases, making the maintenance and management of the programs difficult.

To solve the problem, a method has recently been employed wherein sequence programs for controlling the basic parts of the machine and sequence programs for controlling additional peripheral devices are separately prepared. The processor of the programmable controller executes a plurality of sequence programs fraction by fraction successively so that the sequence programs may appear to be executed in parallel, thus facilitating maintenance of the sequence programs.

To execute a plurality of sequence programs in parallel, a ratio of execution time for the fractions of the sequence programs in each execution cycle, and the sequence programs are executed in accordance with the set ratio.

A programmable controller capable of automatically changing the execution time ratio, as provided by the present invention, is neither known in the art nor disclosed in publications.

In the case where a plurality of sequence programs are executed in parallel in the ratio set according to the predetermined execution times, however, the overall efficiency of the sequence programs sometimes lowers if the execution time of the sequence programs for the numerical control section and the execution time of the sequence programs for the peripheral device are in an inappropriate ratio.

### SUMMARY OF THE INVENTION

The present invention provides a programmable controller capable of freely altering an execution time ratio for a plurality of sequence programs.

The programmable controller of the present invention executes a plurality of sequence programs by repeating an execution cycle of successively executing fractions of the plurality of sequence programs. According to one aspect of the present invention, the programmable controller comprises: a plurality of execution time ratio tables storing different execution time ratios according to which the fractions of the plurality of sequence programs are successively executed in each execution cycle; selecting means for selecting one of the plurality of execution time ratio tables in execution of the plurality of sequence programs; and execution means for successively executing the fractions of the plurality of sequence programs according to the execution time ratio stored in the selected execution time ratio table, thereby the execution time ratio is alterable at desired time in executing the sequence programs.

The selecting means may have a reference table storing relation between bit information and the plurality of execution time ratio tables, and may select one of the plurality of execution time ratio tables in accordance with the reference table and the bit information described in the sequence programs.

Further, the selecting means may select one of the plurality of execution time ratio tables in accordance with a parameter described in the sequence programs, or in accordance with a manual operation by an operator.

According to another aspect of the present invention, the programmable controller comprises: storage means storing an execution time ratio according to which the fractions of the plurality of sequence programs are executed in each execution cycle; altering means for altering the execution time ratio stored in the storage means; effecting means for making the altered execution time ratio effective in execution of the plurality sequence programs; and execution means for successively executing the fractions of the plurality of sequence programs according to the altered execution time ratio in each execution cycle after the altered execution time ratio is made effective.

The altering means may comprise means for allowing a manual operation to alter the execution time ratio, and the effecting means may make the altered execution time ratio effective in accordance with bit information described in the sequence programs.

The altering means may alter the execution time ratio in accordance with designation by a parameter described in the sequence programs, and the effecting means may make the altered execution time ratio effective when the parameter is read from the sequence programs.

The altering means may comprise means for allowing a manual operation to alter the execution time ratio, and the effecting means may comprise means for allowing a manual operation to make the altered execution time ratio effective.

According to the present invention, the execution time ratio according to which the fractions of the plurality of sequence programs are successively executed in each execution cycle can be freely altered in execution of the sequence programs, whereby the sequence programs can be executed with an optimum execution time ratio for the state of sequential operations.

### BRIEF DESCRIPTION OF THE DRAWINGS

FIG. 1 is a block diagram of a principal part of a programmable controller embodying the present invention;
FIG. 2 is a flowchart showing an execution time ratio changing process according to a first embodiment of the present invention;
FIG. 3 exemplifies execution time ratio tables according to the first embodiment;
FIG. 4 exemplifies a correlation table according to the first embodiment;
FIGS. 5a and 5b are diagrams illustrating an alteration of execution time ratio of sequence programs according to the first embodiment;
FIG. 6 is a diagram illustrating an execution time ratio setting screen according to a third embodiment of the present invention;
FIG. 7 is a flowchart showing an execution time ratio changing process according to a fourth embodiment of the present invention;
FIG. 8 is a diagram illustrating an alteration of set values in an execution time ratio table according to the fourth embodiment;
FIG. 9 is a flowchart showing a process executed in every execution cycle according to a fifth embodiment of the present invention;
FIG. 10 is a flowchart showing a sequence program execution process according to the fifth embodiment; and
FIG. 11 is a diagram illustrating an execution time ratio setting screen according to a sixth embodiment of the present invention.

### DETAILED DESCRIPTION

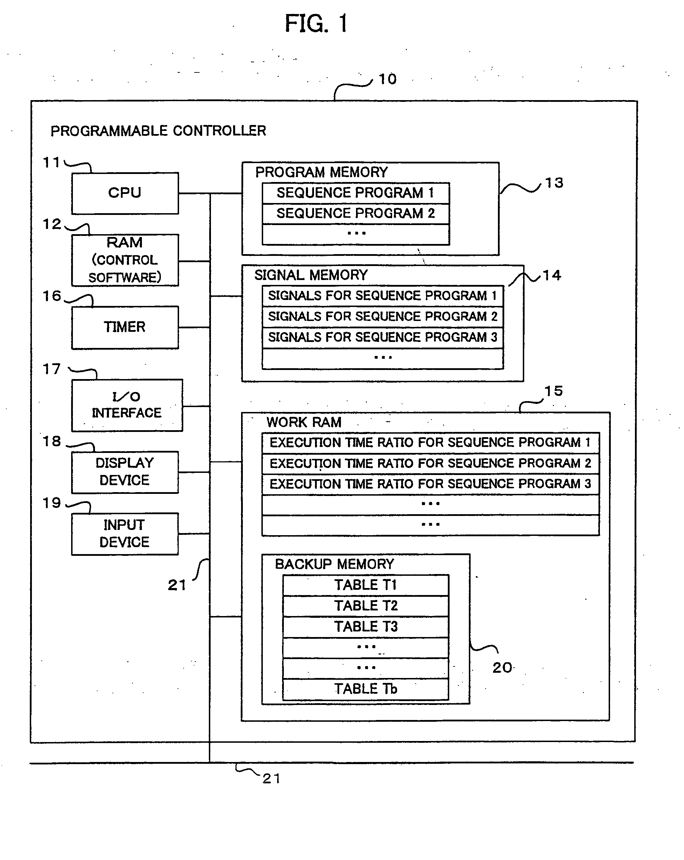

FIG. 1 is a block diagram of a principal part of a programmable controller embodying the present invention. The programmable controller 10 comprises a processor 11 for performing sequential control, a RAM 12 storing system software, a program memory 13 constituted by a nonvolatile RAM or the like and storing sequence programs, a signal memory 14 storing DI/DO signals (input/output signals), a work RAM 15 and a backup memory 20, all interconnected by a bus 21. Also connected to the bus 21 are timers 16 for measuring a processing time etc., an I/O interface 17 connected to input/output devices, a display device 18 constituted by a liquid crystal display, CRT or the like, and a data input device 19, such as a keyboard, for entering data and commands. In the case where the programmable controller 10 is associated with a numerical controller and connected to a numerical control section thereof by the bus 21, the programmable controller 10 need not be provided with the display device 18 and the data input device 19 since the display unit and input device of the numerical control section are shared by the programmable controller.

The hardware configuration of the above programmable controller 10 is identical with that of conventional programmable controllers. The programmable controller of the invention differs from conventional programmable controllers in that the RAM 12 for storing the system software additionally stores software for changing the execution time ratio of sequence programs to be executed within one execution cycle.

In this embodiment, the program memory 13 stores a plurality of sequence programs, and the signal memory 14 is provided with DI/DO signal tables etc. for storing input and output signals in association with the respective sequence programs. The work RAM 15 stores a scan time (time required to execute a sequence program once) of each sequence program, an execution time ratio according to which each sequence program is executed within one execution cycle, etc.

The backup memory 20 is provided with tables etc. for storing respective execution time ratios of sequence programs to be executed in a preset execution cycle.

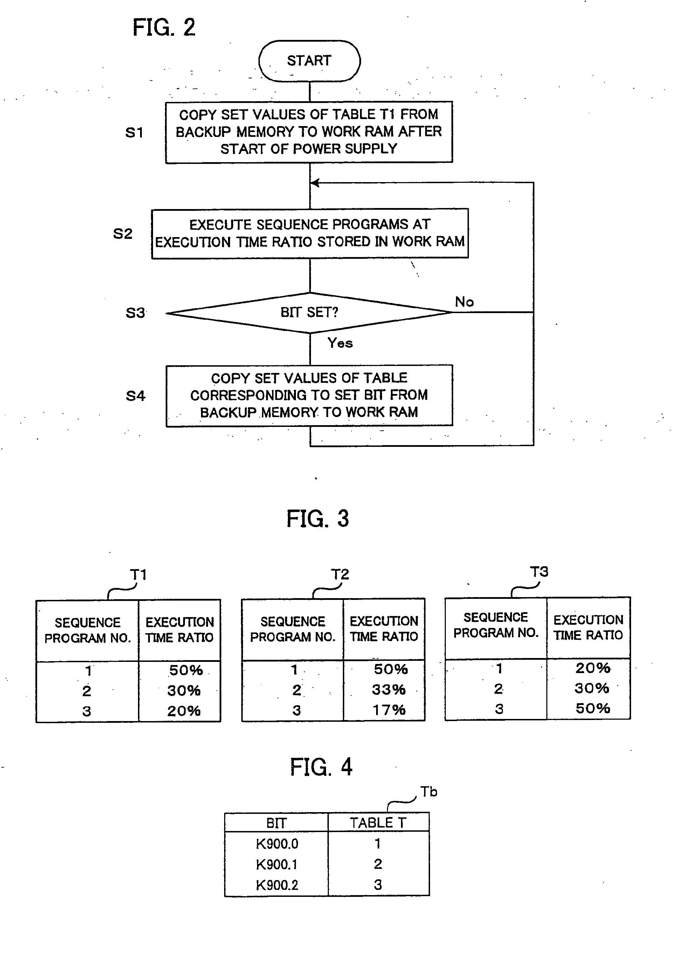

FIG. 2 is a flowchart showing a process executed by the processor 11 of the programmable controller 10 of the first embodiment of the present invention in accordance with the system software stored in the RAM 12.

In the first embodiment, a plurality of tables storing respective different execution time ratios of sequence programs are set in advance in the backup memory 20, in order to alter the execution time ratio of the sequence programs to be executed within one execution cycle. For example, the tables previously stored in the backup memory may include a table which is normally applied and which allots a large execution time ratio to a main sequence program to preferentially execute the same program, a table which is applied after the main sequence program ends and which allots an increased execution time ratio to a sequence program for peripheral device to quickly execute the same program, and a table which is applied at a certain stage of the process according to the sequence programs and which specifies such an execution time ratio of the sequence programs as to enhance the efficiency of the process.

FIG. 3 exemplifies three execution time ratio tables T1, T2 and T3 in which are preset three different execution time ratios for executing three sequence programs 1, 2 and 3 in different time ratios. In the illustrated example, the sequence program 1 is a main sequence program, the sequence program 2 is a sequence program for a loader, and the sequence program 3 is a sequence program for other peripheral device. The execution time ratio table T1 is focused on execution of the main sequence program 1 and 50%, 30% and 20% are set as the execution time ratios for the sequence programs 1, 2 and 3, respectively. Similarly, in the table T2, 50%, 33% and 17% are set as the execution time ratios for the respective sequence programs 1, 2 and 3, and in the table T3, 20%, 30% and 50% are set as the execution time ratios for the respective sequence programs 1, 2 and 3.

Also, correlation between bits, which are each an execution time ratio altering command described in sequence programs, and the execution time ratio tables T1, T2 and T3 is stored in advance in the backup memory 20 as a correlation table Tb. FIG. 4 exemplifies the correlation table Tb, in which the tables T1, T2 and T3 are correlated with bits K900.0, K900.1 and K900.2, respectively.

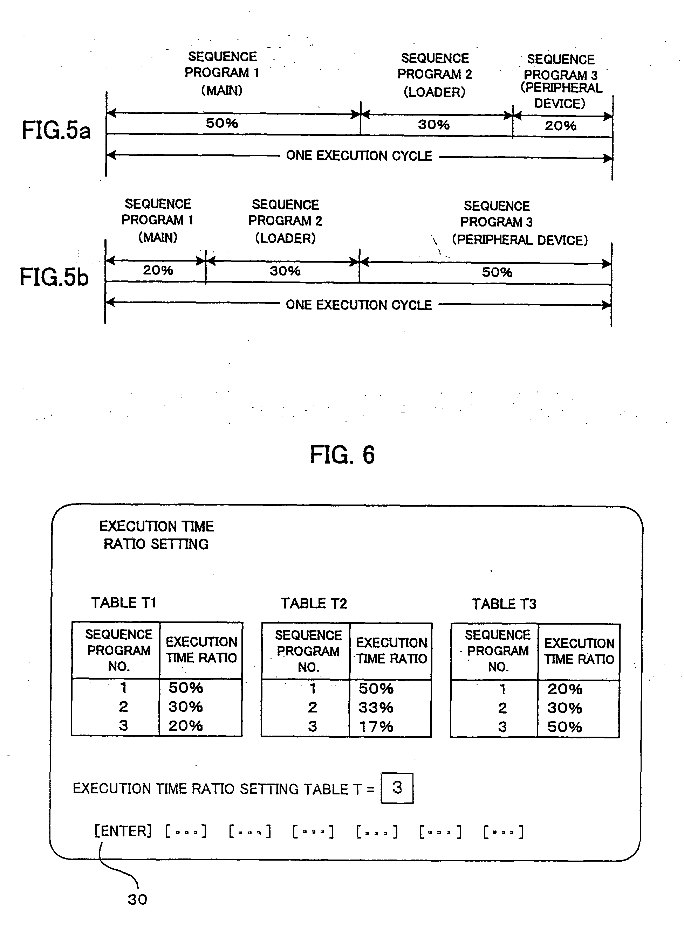

When the power supply to the programmable controller 10 is started, the execution time ratio of the sequence programs stored in the execution time ratio table T1 is read from the backup memory 20 and copied to the work RAM 15 (Step S1). After the execution time ratio of the sequence programs is copied and set in the work RAM 15, the sequence programs are executed at the execution time ratio stored in the work RAM 15 (Step S2), as in a conventional system. As a result, the sequence programs 1, 2 and 3 are executed with one execution cycle divided into 50%, 30% and 20%, as shown in FIG. 5a, since in the example shown in FIG. 3, the execution time ratios of the sequence programs 1, 2 and 3 stored in the table T1 are 50%, 30% and 20%, respectively.

Then, the sequence programs are monitored to detect the aforementioned set bit and thus an execution time ratio altering command (Step S3). If the bit is included in any of the sequence programs and the execution time ratio altering command is read, a table corresponding to the bit is specified from among the execution time ratio tables T1 to T3 by looking up the correlation table Tb, and the execution time ratio of the sequence programs stored in the selected execution time ratio table is copied to the work RAM 15 (Step S4), to alter the execution time ratio. The process then returns to Step S2 and the sequence programs are executed according to the newly selected execution time ratio.

For example, the sequence programs may be programmed such that the first execution time ratio table T1 which is focused on execution of the main sequence program 1, as shown in FIG. 5a, is selected first to allot a large execution time share to the main sequence program 1. The bit "K900.2" may be set at the end of the sequence program 1 such that after one cycle of process of the sequence program 1 ends, the execution time ratio table T3 is selected in which an increased execution time share is allotted to the sequence program 3 for the peripheral device, to quickly carry out the process for the peripheral device.

On detection of the set bit "K900.2" in Step S3, the execution time ratio table T3 corresponding to the bit "K900.2" is selected, and the execution time ratio stored in the table T3 is copied to the work RAM 15 to alter the execution time ratio of the sequence programs, as mentioned above. As a result, as shown in FIG. 5b, the sequence programs 1, 2 and 3 are executed with 20%, 30% and 50% of one execution cycle allotted to the execution time ratios of the respective sequence programs, as specified in the execution time ratio table T3, whereby the process for the peripheral device is quickly carried out. To restore the original execution time ratio focused on execution of the main sequence program 1 after one cycle of process of the sequence program 3 ends, the sequence program 3 may be programmed such that the bit "K900.0" is set at the end of the sequence program 3. In this case, the sequence programs are executed again at the execution time ratio stored in the execution time ratio table T1, as shown in FIG. 5a.

In cases where the overall process can be made to progress efficiently by changing the execution time ratio of sequence programs during execution of the sequence programs, as mentioned above, the execution time ratio tables T1 to Tn and the correlation table Tb are set in advance, and the sequence programs are programmed such that the bit for changing the execution time ratio is set at locations where the execution time ratio of the sequence programs is to be altered, whereby the sequential operation can be carried out efficiently as a whole by freely changing the execution time ratio of the sequence programs.

In the first embodiment described above, the bit-specified execution time ratio altering command is programmed in sequence programs to alter the execution time ratio of the sequence programs, but the execution time ratio may alternatively be altered by a parameter. In a second embodiment of the present invention in which the execution time ratio is altered by a parameter, the correlation table Tb is unnecessary, and the execution time ratios of sequence programs have only to be set and stored in the respective execution time ratio tables T1 to Tn. The sequence programs specify an applicable execution time ratio table by such a parameter.

As for the procedure for the second embodiment, the determination as to whether or not the set bit has been detected, in Step S3 of the process shown in FIG. 2, has only to be replaced by a determination as to whether or not alteration of execution time ratio table has been specified by the parameter. When a different execution time ratio table is specified by the parameter included in any of the sequence programs, the execution time ratio of the sequence programs stored in the specified execution time ratio table is copied to the work RAM 15, and the sequence programs are executed thereafter in accordance with the newly altered execution time ratio.

FIG. 6 illustrates a display screen displayed on the display device 18 for entering a sequence program execution time ratio altering command according to a third embodiment of the present invention. According to the third embodiment, the execution time ratio of sequence programs can be altered at a desired time by the operator.

In the third embodiment, an execution time ratio setting screen shown in FIG. 6 is displayed on the display device 18, and then execution time ratios of sequence programs are previously set in the respective execution time ratio tables and stored in the backup memory 20. When changing the execution time ratio, the execution time ratio setting screen is displayed on the display device 18, an execution time ratio table to be applied is selected by entering the corresponding table number, and an "ENTER" software key 30 is operated to cause the selected table number to be copied to the work RAM 15.

The execution time ratio changing process executed by the processor 11 is almost the same as that shown in FIG. 2 and differs therefrom in that the determination in Step S3 as to whether or not the set bit has been detected is replaced by a determination as to whether or not the "ENTER" software key has been depressed, and in that when the key is depressed, the execution time ratio of the sequence programs stored in the execution time ratio table with the selected table number is copied to the work RAM 15 to alter the execution time ratio (Step S4). The other steps are identical with those of the first embodiment.

In the third embodiment, the execution time ratio of the sequence programs is altered in the next execution cycle immediately after the operator's input of the ENTER command, and thus the execution time ratio can be altered at a desired point of time.

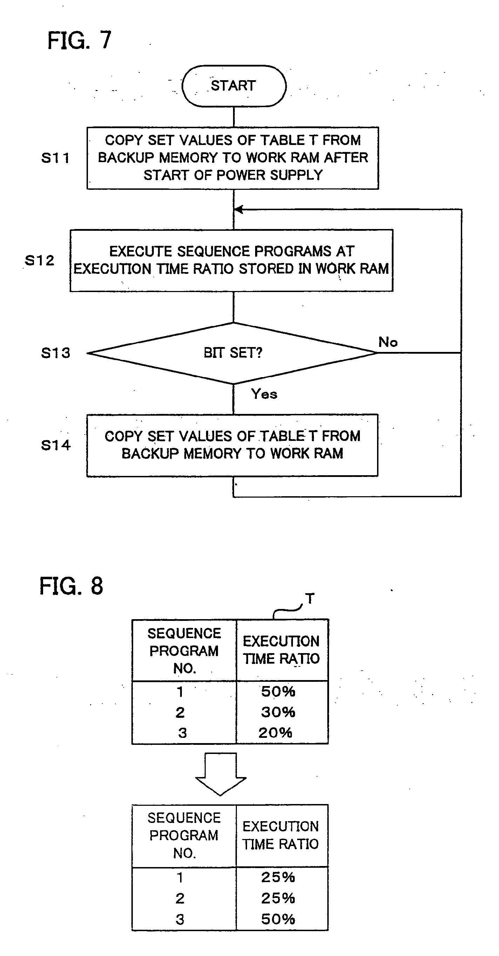

FIG. 7 is a flowchart showing an execution time ratio changing process executed in a fourth embodiment of the present invention by the processor 11 in accordance with the system software.

In the fourth embodiment, only one table is provided for storing the execution time ratio of sequence programs, as shown in FIG. 8, and thus the backup memory 20 stores only one execution time ratio table T. The sequence programs are programmed such that a bit for instructing alteration of the execution time ratio is set at points where the execution time ratio of the sequence programs can be altered.

When changing the execution time ratio of the sequence programs, the operator causes the execution time ratio table T stored in the backup memory 20 to be displayed on the display device 18 or the like, and alters the execution time ratio of the sequence programs, as shown in FIG. 8. FIG. 8 shows an exemplary case of changing the original execution time ratios 50%, 30% and 20% of the sequence programs 1, 2 and 3 to 25%, 25% and 50%, respectively.

On the other hand, the processor 11 executes the process shown in FIG. 7. In the illustrated process, Steps S11 and S12 are respectively identical with Steps S1 and S2 of the process according to the first embodiment. If, in Step S13, a set bit is detected, the execution time ratio of the sequence programs stored in the execution time ratio table T is copied from the backup memory 20 to the work RAM 15 (Step S14), whereupon the process returns to Step S12 to execute the sequence programs according to thus-copied execution time ratio.

Thus, even in the case where a set bit is detected from any of the sequence programs, the sequence programs are executed in the original execution time ratio if the contents of the execution time ratio table T, that is, the execution time ratio of the sequence programs, remain unaltered, and the execution time ratio is altered only when the execution time ratio of the execution time ratio table T has been altered.

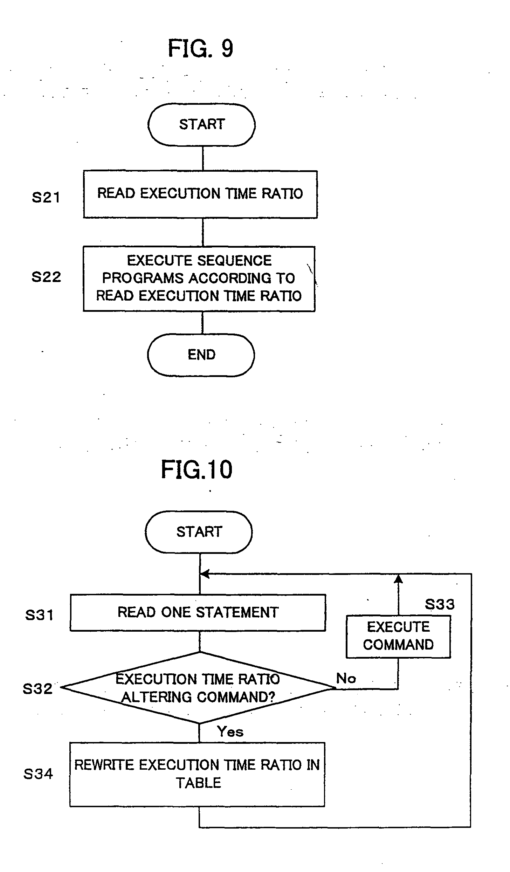

FIG. 9 is a flowchart showing an execution time ratio changing process according to a fifth embodiment of the present invention, and FIG. 10 is a flowchart showing a process for executing individual sequence programs. In the fifth embodiment, the execution time ratio of the sequence programs is altered by a parameter included in the sequence programs.

Execution time ratios are set beforehand as parameters, and the processor 11 executes the process of FIG. 9 in every execution cycle in accordance with the system software. Specifically, the execution time ratio of the sequence programs, set as a parameter, is read out (Step S21), and the sequence programs are executed in accordance with thus-read execution time ratio (Step S22).

On the other hand, each sequence program is executed in the manner shown in FIG. 10. Specifically, one statement of the sequence program is read (Step S31), and it is determined whether or not the read statement is an execution time ratio altering command (Step S32). If the read statement is not an alteration command, the command specified in the statement of the sequence program is executed (Step S33), whereupon the process returns to Step S31. The above process is repeatedly executed thereafter. If the read statement is an execution time ratio altering command, the execution time ratio specified by the command is set as a parameter (Step S34), whereupon the process returns to Step S31.

As a result, when the execution time ratio is altered by any of the sequence programs, the sequence programs are executed in accordance with the altered execution time ratio from the next execution cycle.

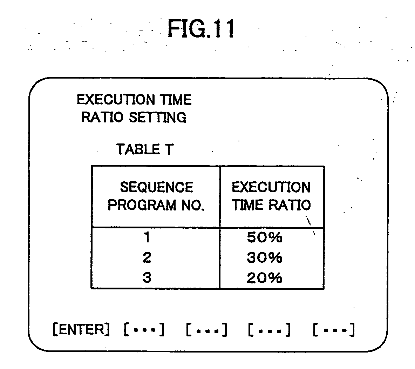

FIG. 11 exemplifies a display screen for instructing alteration of the execution time ratio according to a sixth embodiment of the present invention. In the sixth embodiment, a single table storing the execution time ratio is provided, like the fourth embodiment, and alteration is made to the execution time ratio stored in the table. Unlike the fourth embodiment in which the execution time ratio is altered in response to a set bit command specified in the sequence programs, the execution time ratio is altered in the sixth embodiment in response to the operator's input of an ENTER command.

The operator causes the execution time ratio setting screen to be displayed on screen so that the execution time ratio table T stored in the backup memory 20 may be displayed, as shown in FIG. 11, then alters the execution time ratio set in the table T, and inputs an ENTER command, whereby the newly set execution time ratio is copied to the work RAM 15.

The process executed by the processor 11 is almost identical with that shown in FIG. 7 and differs therefrom in that the determination of Step S13 is replaced by a determination as to whether or not the "ENTER" software key has been depressed. Specifically, if it is judged in Step S13 that the "ENTER" software key has been depressed, the execution time ratio newly set in the table T is copied to the work RAM 15, in Step S14, to alter the execution time ratio, whereupon the process returns to Step S12. Consequently, the sequence programs are executed thereafter in accordance with the newly set execution time ratio.

## Claims

1. A programmable controller for executing a plurality of sequence programs by repeating an execution cycle of successively executing fractions of the plurality of sequence programs, said programmable controller comprising:
a plurality of execution time ratio tables storing different execution time ratios according to which the fractions of the plurality of sequence programs are successively executed in each execution cycle;
selecting means for selecting one of the plurality of execution time ratio tables in execution of the plurality of sequence programs; and
execution means for successively executing the fractions of the plurality of sequence programs according to the execution time ratio stored in the selected execution time ratio table.

2. A programmable controller according to claim 1, wherein said selecting means has a reference table storing relation between bit information and the plurality of execution time ratio tables, and selects one of the plurality of execution time ratio tables in accordance with the reference table and the bit information described in the sequence programs.

3. A programmable controller according to claim 1, wherein said selecting means selects one of the plurality of execution time ratio tables in accordance with a parameter described in the sequence programs.

4. A programmable controller according to claim 1, wherein said selecting means selects one of the plurality of execution time ratio tables in accordance with a manual operation by an operator.

5. A programmable controller for executing a plurality of sequence programs by repeating an execution cycle of successively executing fractions of the plurality of sequence programs, said programmable controller comprising:
storage means storing an execution time ratio according to which the fractions of the plurality of sequence programs are executed in each execution cycle;
altering means for altering the execution time ratio stored in said storage means;
effecting means for making the altered execution time ratio effective in execution of the plurality sequence programs; and
execution means for successively executing the fractions of the plurality of sequence programs according to the altered execution time ratio in each execution cycle after the altered execution time ratio is made effective.

6. A programmable controller according to claim 5, wherein said altering means comprises means for allowing a manual operation to alter the execution time ratio, and said effecting means makes the altered. execution time ratio effective in accordance with bit information described in the sequence programs.

7. A programmable controller according to claim 5, wherein said altering means alters the execution time ratio in accordance with designation by a parameter described in the sequence programs, and said effecting means makes the altered execution time ratio effective when the parameter is read from the sequence programs.

8. A programmable controller according to claim 5, wherein said altering means comprises means for allowing a manual operation to alter the execution time ratio, and said effecting means comprises means for allowing a manual operation to make the altered execution time ratio effective.
